# EUROPEAN PATENT SPECIFICATION

(11) **EP 2 457 701 B1**
(45) Date of publication and mention of the grant of the patent: **29.10.2014**
(21) Application number: 11187482.2
(22) Date of filing: 02.11.2011
(51) Int. Cl.: B25F 5/02, B23D 51/00

(54) **Jigsaw**
Stichsäge
Scie sauteuse

(30) Priority: 26.11.2010 JP 2010264038
(43) Date of publication of application: 30.05.2012
(73) Proprietor: Makita Corporation, Anjo, Aichi 446-8502 (JP)
(72) Inventor: Aoyama, Syuji, Anjo,, Aichi 446-8502 (JP); Niwa, Kenta, Anjo,, Aichi 446-8502 (JP)
(74) Representative: Kramer - Barske - Schmidtchen

(56) References cited:
- EP-A1- 2 239 103
- EP-A2- 2 223 780
- US-A- 6 161 293
- US-A1- 2008 315 693
- US-B1- 6 329 788

## Description

### BACKGROUND OF INVENTION

### TECHNICAL FIELD

This invention relates to a jigsaw according to the preamble of claim 1, including a handle provided on top of a housing accommodating a motor, and a cutting blade operated by the motor driven by a battery pack.

### BACKGROUND ART

US 6,329,788 B1 and EP 2 223 780 A2 disclose cordless power tools, respectively. EP 2 239 103 A1 discloses a chain saw. US 6,161,293 A discloses a circular saw.

For example, Japanese Laid-open Patent Application Publication No. 2008-173712 and US 2008/0315693 disclose the preamble of claim 1 and disclose a cutting machine which includes a battery pack for supplying power to a motor and/or the like. In the cutting machine, a rear end of a housing accommodating the motor is coupled to a handle, and the battery pack is slid onto the rear end of the handle for installation.

However, since the above-described cutting machine is required to fit the handle with the battery pack, the dimensions of the handle are increased in accordance with the battery pack, causing reduced usability of the cutting machine. Further, when the battery pack is slid, in particular, from above to bottom for installation, the battery pack may possibly not be easily installed because the battery pack is not readily slid onto the handle with stability.

### SUMMARY OF INVENTION

The present invention has been made in view of the above circumstances and provides a jigsaw according to claim 1, that provides increased usability and is capable of facilitating installation of a battery pack.

A first aspect provides a jigsaw comprising
a housing,
a motor that is accommodated in the housing,
a handle that is provided on top of housing,
a cutting blade that is operated by the motor driven by a battery pack which is a power source, and
an insert receiving member that is formed in the housing at the rear of the handle and has an open top end to allow the battery pack to be inserted into the insert receiving member through the open top end from above for installation.

In a second aspect, in the first aspect, the insert receiving member is integrally joined to the handle.

In a third aspect, in the first or second aspect, the insert receiving member is disposed in a lower position than the handle in a vertical direction of the housing, and an upper surface of the battery pack is located in a lower position than an upper surface of the handle in the vertical direction when the battery pack is inserted and installed in the insert receiving member.

In a fourth aspect according to the invention, in the first aspect, the insert receiving member has an approximately tubular shape with an open top end and a closed bottom end, an inner shape of the insert receiving member is matched to a contour shape of the battery pack inserted and installed in the insert receiving member. In a fifth aspect of the invention, in the fourth aspect, an opening is formed in a lower end of the insert receiving member to make communication between an interior of the insert receiving member and the outside of the housing.

With the jigsaw according to the first aspect, since the insert receiving member, into which the battery pack is inserted and installed, is provided in the housing at the rear of the handle, this eliminates the necessity to increase the dimensions of the handle in accordance with the battery pack, resulting in the cutting machine with improved usability. In addition, since the battery pack is inserted into the insert receiving member from above, the battery pack can be slid into the insert receiving member with stability, resulting in easy installation of the battery pack to the cutting machine.

According to the second aspect, the insert receiving member is coupled to the handle to improve the rigidity. In addition, when the battery pack is inserted and installed into the insert receiving member, the rigidity of the insert receiving member is combined with the rigidity of the battery pack to provide further improved rigidity.

According to the third aspect, even if the cutting machine falls with the handle facing downward, the upper surface of the handle collides with the floor first. Accordingly, at a drop of the cutting machine, the impact on the battery pack can be lessened.

According to the fifth aspect, dust particles, rainwater and the like entering the interior of the insert receiving member can be removed from the opening to the outside of the housing. As a result, it is possible to prevent the accumulation of dust particles, rainwater and the like in the insert receiving member.

### BRIEF DESCRIPTION OF DRAWINGS

Fig. 1 is a side view of a jigsaw according to an embodiment.
Fig. 2 is a sectional view of an important part of the jigsaw.
Fig. 3 is a top view of the jigsaw with a battery pack inserted into an insert receiving member.
Fig. 4 is a top view of the jigsaw after the battery pack is removed from the insert receiving member.

### Detailed Description

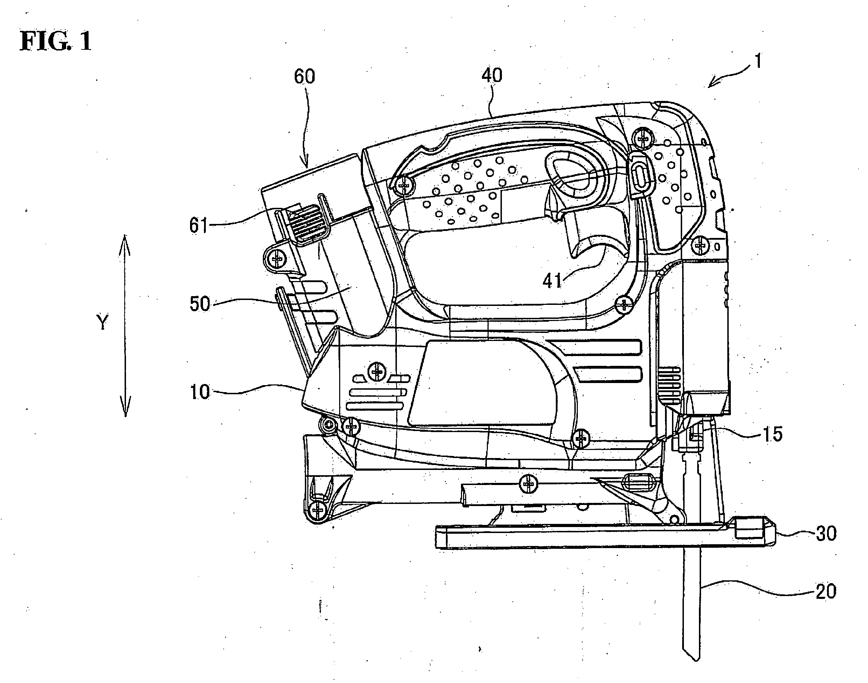

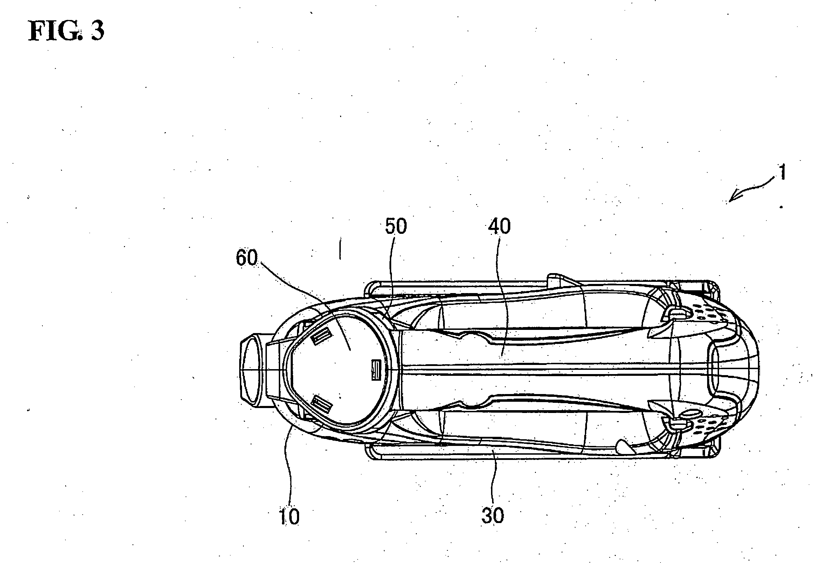

An embodiment will be described below with reference to Fig. 1 to Fig. 4. A jigsaw 1 includes a housing 10, a blade 20, a base 30, a handle 40 and an insert receiving member 50. The jigsaw 1 is an example of a cutting machine.

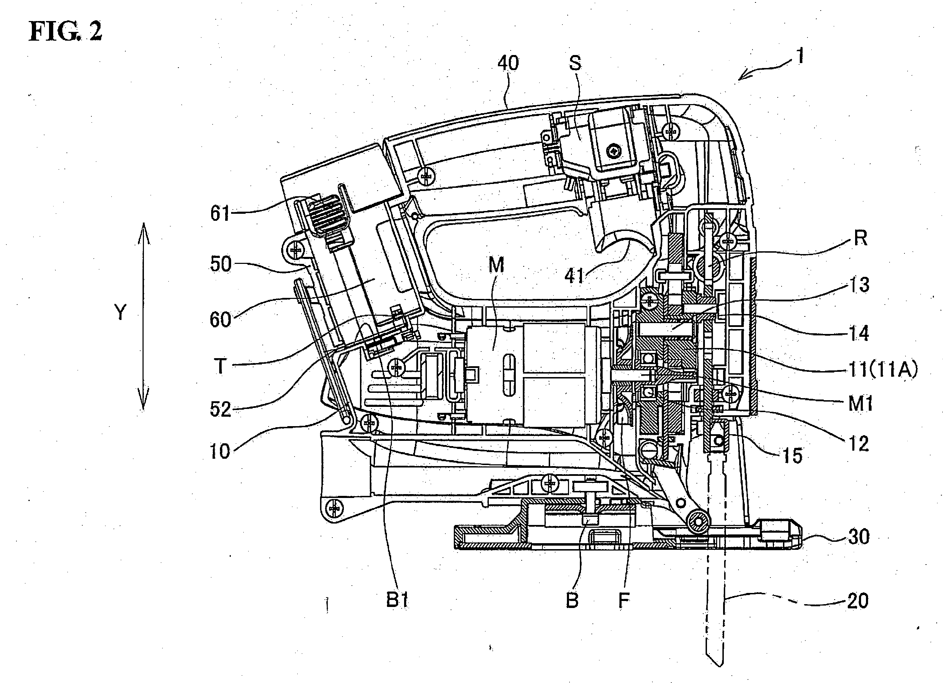

As illustrated in Fig. 2, a motor M is held as a drive source in a central portion of the housing 10, while a reciprocating mechanism 11 is held in a front portion of the housing 10. A fan F for cooling the motor M is mounted on the output shaft M1 of the motor M. In addition, the output shaft M1 is engaged with a drive gear 11A of the reciprocating mechanism 11. The output shaft M1 is rotatably supported by a bearing 12 mounted in the housing 10. The drive gear 11A is rotatably supported through a bearing by a shaft 13 which is secured in the housing 10. A working member 14 is fixed in an off-center position at the front of the drive gear 11A. The working member 14 revolves about the shaft 13 by the rotation of the drive gear 11A. A rod R is supported by the working member 14 in the front portion of the housing 10. The rod R moves in the up and down directions with the revolutions of the working member 14. The rod R is moved upward and downward to make one round trip every time the working member 14 revolves. The rod R has a lower end located outside the housing 10 and a blade mounting 15 is provided at the lower end. The top in Fig. 1 and Fig. 2 refers to the upper direction of the upper and lower directions Y of the housing 10, while the bottom refers to the lower direction of the upper and lower directions Y

A blade 20 has a linear shape and is secured to the blade mounting 15. The blade 20 is an example of the cutting blade according to the embodiment of the present invention. The base 30 is attached to an underside of the housing 10 with a base setbolt B screwed to the underside. The base 30 is used to come into contact with the upper surface of a material to be cut (not shown).

The handle 40 is formed on the top of the housing 10 when viewed from a side of the jigsaw 1. The upper surface of the handle 40 is slightly curved to be inclined downward in the rearward direction (in the left direction in Fig. 2). A switch S is held in the handle 40 and has a trigger 41 for supplying or stopping power to the motor M. The left side in Fig. 1 to Fig. 4 refers to rearward of the handle 40, while the right side refers to forward of the handle 40.

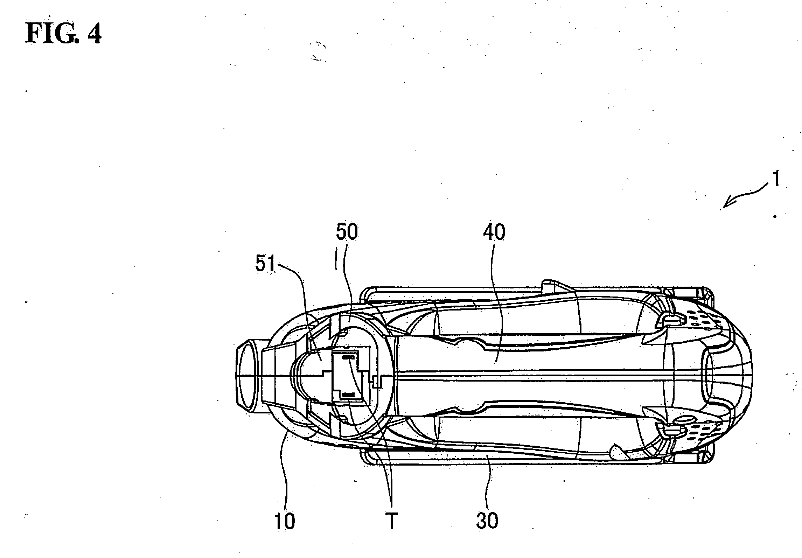

The insert receiving member 50 has an approximately tubular shape having an opening 51 (see Fig. 4) formed at the upper surface, and is formed by recessing the housing 10. The inner surface of the insert receiving member 50 has a shape matched to the contour shape of a battery pack 60, so that the battery pack 60 can be inserted into the interior of the insert receiving member 50 through the opening 51 from above for installation. The insert receiving member 50 is situated at the rear of the handle 40 while being inclined toward the rear of the housing 10. The insert receiving member 50 is located lower than the handle 40 in the vertical direction Y, and is integrally combined with the rear end face of the handle 40.

As illustrated in Fig. 2 and Fig. 4, terminals T electrically connected to the motor M through lead wires (not shown) extend beyond a bottom B1 of the insert receiving member 50 within the insert receiving member 50. While the battery pack 60 is inserted and installed to the insert receiving member 50, the terminals T can make an electric contact with an electrode plate of the battery pack 60. At this stage, an engaging portion 61 of the battery pack 60 is engaged with the inner surface of the insert receiving member 50, such that the upper surface of the battery pack 60 is located lower than the upper surface of the handle 40 in the vertical direction Y

A discharge port 52 is provided in the lower end of the rear face of the insert receiving member 50 close to the lower end of the slope of the bottom B1. The discharge port 52 allows communication between the interior of the insert receiving member 50 and the outside of the housing 10. In the embodiment, the discharge port 52 is provided in the rear face of the insert receiving member 50 so as to be placed at a distance from a cutting site of the material cut by the blade 20, so that dust particles produced at the cutting site are prevented from entering the interior of the insert receiving member 50 from the discharge port 52. Dust particles, rainwater and/or the like entering the interior of the insert receiving member 50 from the opening 51 are guided along the slope of the bottom B 1 to the discharge port 52. As a result, the discharge port 52 discharges the dust particles, rainwater and/or the like from the housing 10 to the outside. Note that the lower end of the rear face of the insert receiving member 50 is an example of a lower end of an insert receiving member, and the discharge port 52 is an example of an opening.

In the embodiment, since the interior shape (inner face) of the insert receiving member 50 is matched to the contour shape of the battery pack 60, the interior of the insert receiving member 50 serves as a guiding face when the batter pack 60 is inserted into/removed from the interior. Accordingly, if the battery pack 60 is slid along the interior from the opening 51, the battery pack 60 can be smoothly attached to/detached from the insert receiving member 50.

When the switch S is turned on by pressing the trigger 41 toward the handle 40, the battery pack 60 which is a power source supplies power to the motor M to drive the motor M. In step with this, upon the rotation of the drive gear 11A, the blade 20, together with the rod R, reciprocates in the vertical direction Y to cut the to-be-cut material.

Since the jigsaw 1 according to the embodiment has the insert receiving member 50 formed in the housing 10 at the rear of handle 40, this eliminates the necessity to increase the dimensions of the handle 40 in accordance with the size of the battery pack 60, resulting in the jigsaw 1 with improved usability. In addition, since the battery pack 60 is inserted into the insert receiving member 50 from above, the battery pack 60 can be slid into the insert receiving member 50 with stability, resulting in easy installation of the battery pack 60 to the jigsaw 1.

Further, since the insert receiving member 50 is coupled to the handle 40, the rigidity is improved. In addition, when the battery pack 60 is inserted and installed into the insert receiving member 50, the rigidity of the insert receiving member 50 is combined with the rigidity of the battery pack 60 to provide further improved rigidity.

Even if the jigsaw 1 falls with the handle 40 facing downward, the upper surface of the handle 40 collides with the floor first. Therefore, the impact on the battery pack 60 can be lessened.

In addition, since the discharge port 52 is provided in the rear face of the insert receiving member 50 close to the lower end of the slope of the bottom B1, the dust particles, rainwater and/or the like entering the interior of the insert receiving member 50 can be guided along the slope of the bottom B 1 to the discharge port 52, and the can be discharged from the discharge port 52 to the outside of the housing 10.

The present invention should be not limited to the aforementioned embodiment, and may be carried out by approximately changing partially the structure without departing from the scope of the invention as defined in the claims.

Unlike the aforementioned embodiment, the discharge port may be formed in the bottom B1, and a discharge passage may be provided to communicate with the discharge port and the outside of the housing 10 holding the motor M, such that the dust particles and the like can be discharged from the discharge port through the discharge passage to the outside of the housing.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A jigsaw (1) comprising a housing (10) accommodating a motor (M), a handle (40) provided on top of the housing (10), and a cutting blade (20) operated by the motor (M) driven by a battery pack (60) which is a power source, wherein
an insert receiving member (50) is formed in the housing (10) at the rear of the handle (40), **characterized in that** the insert receiving member (50) has an open top end to allow the battery pack (60) to be inserted into the insert receiving member from above for installation, and
the insert receiving member (50) has an approximately tubular shape with an open top end and a closed bottom end, an inner shape of the insert receiving member (50) is matched to a contour shape of the battery pack (60) inserted and installed in the insert receiving member (50).

2. The jigsaw (1) according to claim 1, wherein the insert receiving member (50) is integrally joined to the handle (40).

3. The jigsaw (1) according to claim 1 or 2, wherein the insert receiving member (50) is disposed in a lower position than the handle (40) in the vertical direction (Y) of the housing (10), and an upper surface of the battery pack (60) is located in a lower position than an upper surface of the handle (40) in the vertical direction (Y) when the battery pack (60) is inserted and installed in the insert receiving member (50).

4. The jigsaw (1) according to any one of claims 1 to 3, wherein the insert receiving member (50) is provided in the housing (10) while being inclined downward in the rear direction of the housing (10).

5. The jigsaw (1) according to any one of claims 1 to 4, wherein a terminal (T) electrically connected to the motor (M) extends into an interior of the insert receiving member (50) beyond a bottom (B1) of the insert receiving member (50), and an electrode plate of the battery pack (60) inserted and installed in the interior comes into electric contact with the terminal (T).

6. The jigsaw (1) according to any one of claims 1 to 5, wherein an opening (52) is formed in a lower end of the insert receiving member (50) to make communication between an interior of the insert receiving member (50) and the outside of the housing (10).

7. The jigsaw (1) according to claim 6, wherein the opening (52) is provided in a lower end of a rear face of the insert receiving member (50).

8. The jigsaw (1) according to claim 6 or 7, wherein the opening (52) is provided in a lower end of a rear face of the insert receiving member (50) close to a lower end of a slope of the bottom of the insert receiving member (50).

## Patentansprüche

1. Stichsäge (1), die ein Gehäuse (10), das einen Motor (M) aufnimmt, einen Handgriff (40), der an der Oberseite des Gehäuses (10) vorgesehen ist, und ein Schneideblatt (20) aufweist, das durch den Motor (M), der durch ein Batteriepack (60), welches eine Leistungsquelle ist, angetrieben wird, betrieben wird, bei der
ein Einsatzaufnahmebauteil (50) in dem Gehäuse (10) an der Rückseite des Handgriffes (40) ausgebildet ist,
**dadurch gekennzeichnet, dass** das Einsatzaufnahmebauteil (50) ein offenes oberes Ende aufweist, um es dem Batteriepack (60) zu ermöglichen, in das Einsatzaufnahmebauteil für eine Montage von oben eingeführt zu werden, und
das Einsatzaufnahmebauteil (50) eine in etwa rohrförmige Form mit einem offenen oberen Ende und einem geschlossenen unteren Ende aufweist, und eine innere Form des Einsatzaufnahmebauteils (50) passend zu der Konturform des Batteriepacks (60) ist, das in das Einsatzaufnahmebauteil (50) eingeführt und montiert wird.

2. Stichsäge nach Anspruch 1, bei der das Einsatzaufnahmebauteil (50) mit dem Handgriff (40) integral verbunden ist.

3. Stichsäge (1) nach Anspruch 1 oder 2, bei dem das Einsatzaufnahmebauteil (50) in der vertikalen Richtung (Y) des Gehäuses (10) in einer niedrigeren Position als der Handgriff (40) angeordnet ist, und eine obere Oberfläche des Batteriepacks (60) in der vertikalen Richtung (Y) in einer niedrigeren Position als eine obere Oberfläche des Handgriffs (40) liegt, wenn das Batteriepack (60) in das Einsatzaufnahmebauteil (50) eingeführt und montiert ist.

4. Stichsäge (1) nach einem der Ansprüche 1 bis 3, bei dem das Einsatzaufnahmebauteil (50) in dem Gehäuse (10) vorgesehen ist, indem es nach unten in der rückwärtigen Richtung des Gehäuses (10) geneigt ist.

5. Stichsäge (1) nach einem der Ansprüche 1 bis 4, bei dem ein Anschluss (T), der mit dem Motor (M) elektrisch verbunden ist, sich in ein Inneres des Einsatzaufnahmebauteils (50) über einen Boden (B1) des Einsatzaufnahmebauteils (50) hinaus erstreckt, und eine Elektronenplatte des Batteriepacks (60), das in das Innere eingeführt und montiert ist, in elektrischem Kontakt mit dem Anschluss (T) kommt.

6. Stichsäge (1) nach einem der Ansprüche 1 bis 5, bei dem eine Öffnung (52) in einem unteren Ende des Einsatzaufnahmebauteils (50) zum Herstellen einer Verbindung zwischen einem Inneren des Einsatzaufnahmebauteils (50) mit der Außenseite des Gehäuses (10) ausgebildet ist.

7. Stichsäge (1) nach Anspruch 6, bei dem die Öffnung (52) in einem unteren Ende einer rückwärtigen Fläche des Einsatzaufnahmebauteils (50) vorgesehen ist.

8. Stichsäge (1) nach Anspruch 6 oder 7, bei dem die Öffnung (52) in einem unteren Ende einer rückwärtigen Fläche des Einsatzaufnahmebauteils (50) nahe einem unteren Ende eines Gefälles des Bodens des Einsatzaufnahmebauteils (50) vorgesehen ist.

## Revendications

1. Scie sauteuse (1) comprenant un boîtier (10) logeant un moteur (M), un manche (40) prévu sur le dessus du boîtier (10), et une lame de coupe (20) actionnée par le moteur (M) entraîné par un bloc de batterie (60) qui est une source de puissance, dans laquelle
un élément de réception d'insert (50) est formé dans le boîtier (10) sur l'arrière du manche (40), **caractérisée en ce que** l'élément de réception d'insert (50) présente une extrémité supérieure ouverte pour permettre au bloc de batterie d'être inséré dans l'élément de réception d'insert par le dessus pour l'installation,
l'élément de réception d'insert (50) présente une forme approximativement tubulaire avec une extrémité supérieure ouverte et une extrémité inférieure fermée, une forme intérieure de l'élément de réception d'insert (50) est adaptée à une forme de contour du bloc de batterie (60) inséré et installé dans l'élément de réception d'insert (50).

2. Scie sauteuse (1) selon la revendication 1, dans laquelle l'élément de réception d'insert (50) est intégralement joint au manche (40).

3. Scie sauteuse (1) selon la revendication 1 ou 2, dans laquelle l'élément de réception d'insert (50) est agencé dans une position inférieure à celle du manche (40) dans la direction verticale (Y) du boîtier (10) et une surface supérieure du bloc de batterie (60) est située dans une position inférieure à celle d'une surface supérieure du manche (40) dans la direction verticale (Y) lorsque le bloc de batterie (60) est inséré et installé dans l'élément de réception d'insert (50).

4. Scie sauteuse (1) selon l'une quelconque des revendications 1 à 3, dans laquelle l'élément de réception d'insert (50) est prévu dans le boîtier (10) tout en étant incliné vers le bas dans la direction arrière du boîtier (10).

5. Scie sauteuse (1) selon l'une quelconque des revendications 1 à 4, dans laquelle un terminal (T) relié électriquement au moteur (M) s'étend dans une partie intérieure de l'élément de réception d'insert (50) au-delà d'un fond (B1) de l'élément de réception d'insert (50) et une plaque d'électrode du bloc de batterie (60) insérée et installée dans la partie intérieure établit un contact électrique avec le terminal (T).

6. Scie sauteuse (1) selon l'une quelconque des revendications 1 à 5, dans laquelle une ouverture (52) est formée dans une extrémité inférieure de l'élément de réception d'insert (50) pour établir une communication entre une partie intérieure de l'élément de réception d'insert (50) et le côté extérieur du boîtier (10).

7. Scie sauteuse (1) selon la revendication 6, dans laquelle l'ouverture (52) est prévue dans une extrémité inférieure d'une face arrière de l'élément de réception d'insert (50).

8. Scie sauteuse (1) selon la revendication 6 ou 7, dans laquelle l'ouverture (52) est prévue dans une extrémité inférieure d'une face arrière de l'élément de réception d'insert (50) près d'une extrémité inférieure d'une pente de la partie inférieure de l'élément de réception d'insert (50).
